# EUROPEAN PATENT APPLICATION

(11) **EP 1 422 597 A1**
(43) Date of publication of application: **26.05.2004**
(21) Application number: 02762917.9
(22) Date of filing: 30.08.2002
(51) Int. Cl.: G06F 3/00, G10K 15/02, G09G 5/00, G11B 27/34

(54) **INFORMATION PROCESSING APPARATUS AND METHOD**

(30) Priority: 31.08.2001 JP 2001262936
(71) Applicant: Sony Corporation, Tokyo 141-0001 (JP)
(72) Inventor: SAKURAI, Mikiko, c/o SONY CORPORATION, Tokyo 141-0001 (JP); KORI, Takayuki, c/o SONY CORPORATION, Tokyo 141-0001 (JP); KOJIMA, Kiyonobu, c/o SONY CORPORATION, Tokyo 141-0001 (JP)
(74) Representative: DeVile, Jonathan Mark, Dr.
(86) International application number: PCT/JP2002/008778
(87) International publication number: WO 2003/019342

(57) **Abstract**

The present invention relates to an information processing apparatus and an information processing method. In step S31, it is determined whether or not an equalizer button has been pressed, and if it is determined that the equalizer button has been pressed, it is determined whether or not an equalizer page is displayed in step S32. If it is determined that the equalizer page is not displayed, the process proceeds to step S33. In step S33, a GUI unit displays the equalizer page from the top to the bottom. In step S32, in a state where the equalizer page is displayed, when any of the equalizer button, a CD tab, an import tab, a play list, a transfer tab, an apparatus/media tab, and an Internet tab is pressed, the GUI unit takes off the equalizer page upward from the bottom so that the equalizer page is not displayed in step S34, because the equalizer page is displayed. The present invention can be applied to music playback software.

## Description

### Technical Field

The present invention relates to information processing apparatuses and information processing methods. In particular, the present invention relates to an information processing apparatus and an information processing method in which a user can easily operates content on a personal computer.

### Background Art

Recently, with a progress in a digital technique, various types of content (data) including music data and image data has been digitally recorded in a recoding medium or has been played back.

Software, which is used for recording, playing back, moving, or copying the content by an operation on a display of a computer, has become widespread.

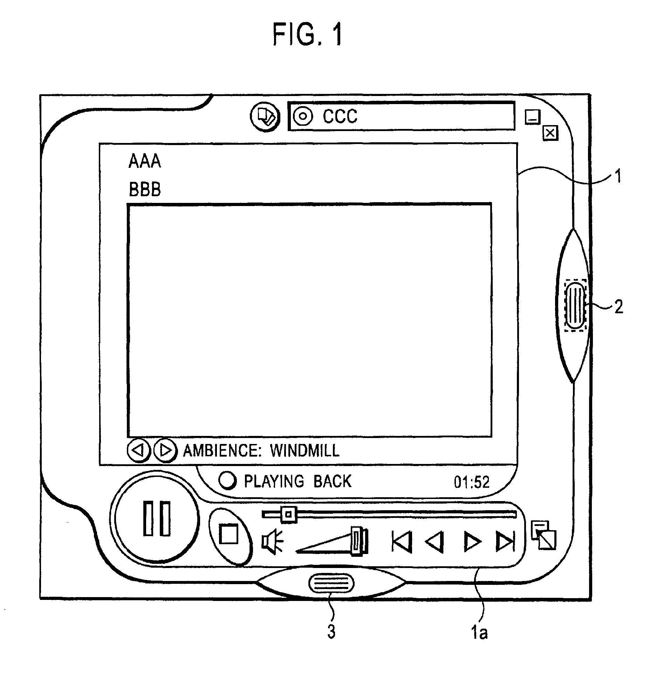

Fig. 1 shows a display of software which is used as a player for playing back music content. A title display unit 1 is provided at the center of the display. In this case, "AAA" is displayed as the name of an artist and "BBB" is displayed as the title of a song. Further, "CCC" is displayed as the name of a folder which stores the music content at the top.

Also, an operation button display unit la is provided at a lower part thereof, and buttons which are operated in order to play back, stop, fast-forward, rewind, or pause the content are displayed there. Various operations can be performed by operating a pointer (not shown) with a mouse and by clicking a desired button.

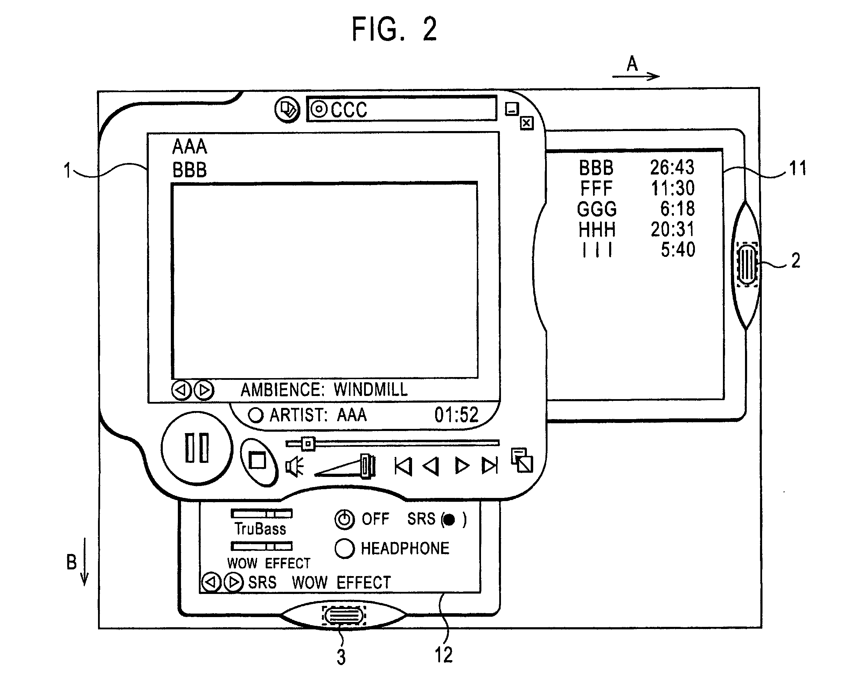

Further, when a button 2 is clicked, a title list display unit 11, which shows the list of music content that can be currently played back, is drawn out in the direction of arrow A in Fig. 2. A user can check the list and find the content that can be currently played back. In this case, "BBB", "FFF", "GGG", "HHH", and "III" are shown as content which can be played back.

Also, when a button 3 is clicked, a control-button display unit 12, which includes various buttons and tabs for controlling the tone of the music content to be played back, is drawn out in the direction of arrow B in Fig. 2. The user can operate various buttons of the control-button display unit 12 so as to enjoy played back music content with a desired tone.

Incidentally, in software having the above-described function of a player, the button 2 or 3 has to be pressed so as to display the title list display unit 11 or the control-button display unit 12, every time the content list is checked or various control buttons are used, as shown in Figs. 1 and 2. Therefore, a further area is required on the display. For example, when another type of software is operated and when another image is displayed, the displayed information hides and comprehensive visibility of the display disadvantageously decreases.

Also, when various operations are performed in the above-described software, the user must operate the title list display unit 11 and the control-button display unit 12 repeatedly in order to switch display and non-display of the title list display unit 11 and the control-button display unit 12. Accordingly, the operation becomes complicated.

### Disclosure of Invention

The present invention has been made in view of the above-described state, and an object of the present invention is to improve operationality for controlling playback and recording of content in a personal computer or the like.

An information processing apparatus of the present invention comprises: playback means for playing back content; control-page display means for displaying a control page for controlling the playback means; content-list display means for displaying a content list page; switching means for switching between the control page and the list page; and display control means for controlling the control-page display means and the content-list display means so that the control page and the list page are displayed such that the control page covers the list page or that the control page is taken off from the list page when the switching means switches between the control page and the list page.

The content-list display means is allowed to display a plurality of list pages and displays a tab corresponding to each list page.

The display method of the tab in the list page is changed when the tab includes content which is being performed.

An information processing method of the present invention comprises: a playback step for playing back content; a control-page display step for displaying a control page for controlling the playback step; a content-list display step for displaying a content list page; a switching step for switching between the control page and the list page; and a display control step for controlling the control-page display step and the content-list display step so that the control page and the list page are displayed such that the control page covers the list page or that the control page is taken off from the list page when the control page and the list page are switched in the switching step.

A program of the present invention allows a computer to execute steps comprising: a playback control step for controlling playback of content; a control-page display control step for controlling display of a control page for controlling the playback control step; a content-list display control step for controlling display of a content list page; a switching control step for controlling switching between the control page and the list page; and a display control step for controlling the control-page display control step and the content-list display control step so that the control page and the list page are displayed such that the control page covers the list page or that the control page is taken off from the list page when the control page and the list page are switched in the switching step.

In the information processing apparatus, the information processing method, and the program of the present invention, the control page for controlling playback of content is displayed, the content list page is displayed, the control page and the list page are switched, and the control page and the list page are displayed such that the control page covers the list page or that the control page is taken off from the list page when the control page and the list page are switched.

### Brief Description of the Drawings

Fig. 1 shows a display example of a page which is displayed on a display when software having a known player function is executed.
Fig. 2 shows a display example of a page which is displayed on the display when software having the known player function is executed.
Fig. 3 shows an embodiment of a content data management system according to the present invention.
Fig. 4 is a block diagram showing the configuration of a personal computer.
Fig. 5 is a block diagram showing the function of the personal computer.
Fig. 6 shows an example of data recorded in a database shown in Fig. 5.
Fig. 7 shows the correspondence between a song and a file.
Fig. 8 shows an example of right information.
Fig. 9 illustrates a process of encrypting content, a process of adding right information corresponding to the content, and a process of transforming an encoding method of the content.
Fig. 10 is a flowchart showing a display process.
Fig. 11 shows a display example of a page displayed on a display.
Fig. 12 shows a display example of a page displayed on the display.
Fig. 13 shows a display example of a page displayed on the display.
Fig. 14 shows a display example of a page displayed on the display.
Fig. 15 shows a display example of a page displayed on the display.
Fig. 16 shows a display example of a page displayed on the display.
Fig. 17 is a flowchart showing a quasi-active display process.
Fig. 18 shows a display example of a page displayed on the display.
Fig. 19 is a flowchart showing an equalizer display process.
Fig. 20 shows a display example of a page displayed on the display.

### Best Mode for Carrying Out the Invention

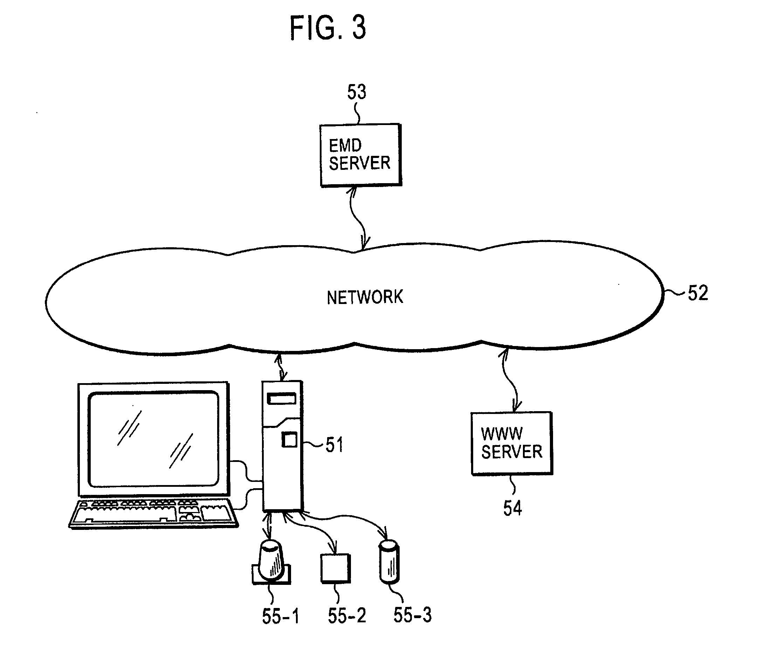

Fig. 3 shows an embodiment of a content data management system according to the present invention. A personal computer 51 is connected to a network 52 including a local area network or the Internet. The personal computer 51 records song data (hereinafter referred to as content) which has been received from an electronic music distribution (EMD) server 53 or which has been read from a compact disc (CD) in its original form, or transforms the content with a predetermined encoding method (for example, ATRAC3®) and also encrypts the content with an encryption method such as data encryption standard (DES) so as to record the content.

The personal computer 51 records right information indicating usage conditions of content, corresponding to the content which has been recorded in its original form or in an encrypted form.

The right information includes, for example, the number of portable devices (also referred to as PD) which can use the content corresponding to the right information at the same time (that is, the number of PDs which can check out the content, which will be described later). Even if PDs, whose number is indicated by the right information, check out the content, the personal computer 51 can play back the content.

The right information also includes information about whether or not the content can be copied. When the content is copied to portable devices 55-1 to 55-3, the personal computer 51 can play back the recorded content. The number of storing the content in the portable devices 55-1 to 55-3 may be limited. In this case, the number of possible copying never increases.

Further, the right information includes information about whether or not the content can be moved to another computer. After the content has been moved to the portable devices 55-1 to 55-3, the content recorded in the personal computer 51 cannot be used (the content is deleted or the right information is changed).

The details of the right information will be described later.

The personal computer 51 allows the portable device 55-1 connected thereto to store the content recorded therein in an encrypted form via an universal serial bus (USB) cable, together with data related to the content (for example, the title of a song or playback conditions). At the same time, the personal computer 51 updates the right information corresponding to the stored content (hereinafter, referred to as check-out). More specifically, when check-out is performed, the number of possible check-out of the right information corresponding to the content is decreased by 1, the number being recorded in the personal computer 51. When the number of possible check-out is 0, the corresponding content cannot be checked out.

The personal computer 51 allows the portable device 55-2 connected thereto to store the content recorded therein in an encrypted form via an USB cable, together with data related to the content. At the same time, the personal computer 51 updates the right information corresponding to the stored content. Also, the personal computer 51 allows the portable device 55-3 connected thereto to store the content recorded therein in an encrypted form via an USB cable, together with data related to the content. At the same time, the personal computer 51 updates the right information corresponding to the stored content.

Further, the personal computer 51 allows the portable device 55-1 to delete the content which the personal computer 51 has checked out to the connected portable device 55-1 via the USB cable (or the content cannot be used) so that the right information corresponding to the deleted content is updated (hereinafter, referred to as check-in). More specifically, when check-in is performed, the number of possible check-out of the right information corresponding to the content is increased by 1, the number being recorded in the personal computer 51.

The personal computer 51 allows the portable device 55-2 to delete the content which the personal computer 51 has checked out to the connected portable device 55-2 via the USB cable (the content cannot be used) so that the right information corresponding to the deleted content is updated. Also, the personal computer 51 allows the portable device 55-3 to delete the content which the personal computer 51 has checked out to the connected portable device 55-3 via the USB cable (the content cannot be used) so that the right information corresponding to the deleted content is updated.

The personal computer 51 cannot check in the content which another personal computer (not shown) has checked out to the portable device 55-1. The personal computer 51 cannot check in the content which another personal computer has checked out to the portable device 55-2. The personal computer 51 cannot check in the content which another personal computer has checked out to the portable device 55-3.

The EMD server 53 supplies content and data related to the content (for example, the title of a song or playback limitation) to the personal computer 51 via the network 52 in response to a request from the personal computer 51.

The content supplied by the EMD server 53 is encoded in a predetermined encoding method and is encrypted in a predetermined encrypting method. The EMD server 53 supplies a key for decoding the content to the personal computer 51.

A world wide web (WWW) server 54 supplies data corresponding to a CD from which content has been read (for example, the name of album recorded in the CD or the seller of the CD) and data corresponding to the content which has been read from the CD (for example, the title of a song or the name of a song writer) to the personal computer 51 via the network 52 in response to a request from the personal computer 51.

The portable device 55-1 stores the content supplied from the personal computer 51 (that is, checked out content), together with data related to the content (for example, the title of a song or playback limitation). The portable device 55-1 plays back the stored content based on the data related to the content so as to output the content to a headphone or the like (not shown).

For example, when playback is attempted such that the number of playback surpasses the playback limitation, which is stored as data related to the content, the portable device 55-1 stops playing back the corresponding content. Also, when playback is attempted after the playback expiration date as the playback limitation, which is stored as data related to the content, the portable device 55-1 stops playing back the corresponding content.

A user can remove the portable device 55-1, which has stored the content, from the personal computer 51, and carry the portable device 55-1 so as to play back the stored content and listen to music corresponding to the content by using a headphone or the like.

The portable device 55-2 stores the content supplied from the personal computer 51, together with data related to the content. The portable device 55-2 plays back the stored content based on the data related to the content so as to output the content to a headphone or the like (not shown). The user can remove the portable device 55-2, which has stored the content, from the personal computer 51, and carry the portable device 55-2 so as to play back the stored content and listen to music corresponding to the content by using a headphone or the like.

The portable device 55-3 stores the content supplied from the personal computer 51, together with data related to the content. The portable device 55-3 plays back the stored content based on the data related to the content so as to output the content to a headphone or the like (not shown). The user can remove the portable device 55-3, which has stored the content, from the personal computer 51, and carry the portable device 55-3 so as to play back the stored content and listen to music corresponding to the content by using a headphone or the like.

Hereinafter, when individual portable devices 55-1 to 55-3 need not be distinguished from each other, they will be referred to as a portable device 55.

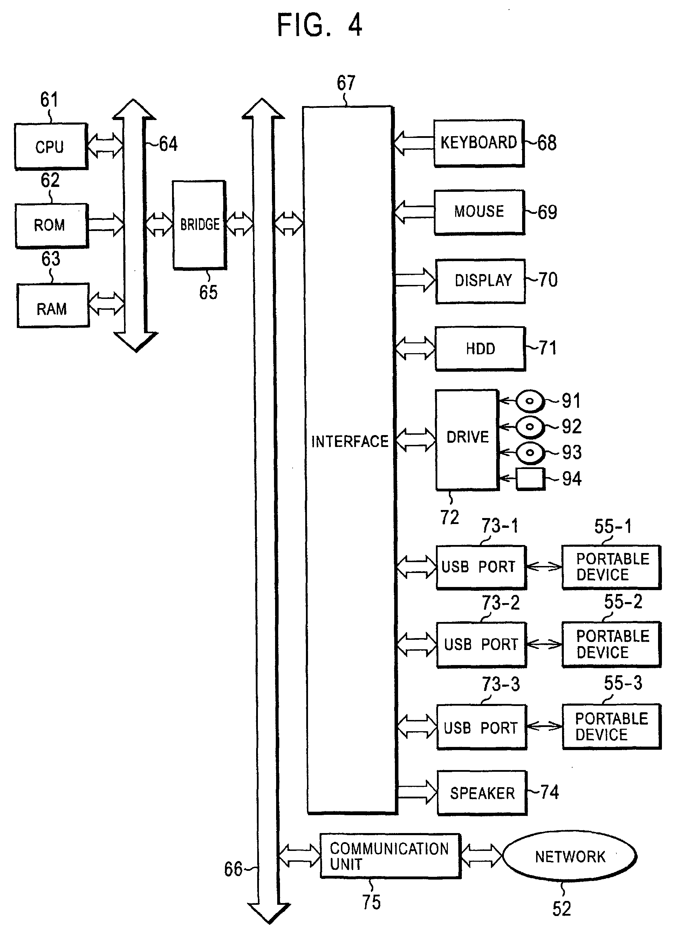

Fig. 4 shows the configuration of the personal computer 51. A central processing unit (CPU) 61 actually executes various application programs for realizing functions described later and an operating system (OS). A read-only memory (ROM) 62 generally stores basically-fixed data among programs used by the CPU 61 and parameters for computing. A random-access memory (RAM) 63 stores programs used for execution of the CPU 61 and parameters which changes in the execution. These units are mutually connected via a host bus 64 including a CPU bus or the like.

The host bus 64 is connected to an external bus 66 such as a peripheral component interconnect/interface (PCI) bus via a bridge 65.

A keyboard 68 is operated by the user in order to input various commands to the CPU 61. A mouse 69 is operated by the user in order to indicate or select a point on a display 70. The display 70 includes a liquid crystal display device or a cathode ray tube (CRT) and displays various information in the form of text or image. A hard disc drive (HDD) 71 drives a hard disc so that the hard disc records or plays back a program or information executed by the CPU 61.

A drive 72 reads data or a program recorded in a magnetic disc 91, an optical disc 92 (including a CD), a magnetooptical disc 93, or a semiconductor memory 94, which are loaded in the drive 72, and supplies the data or the program to the RAM 63 connected via an interface 67, the external bus 66, the bridge 65, and the host bus 64.

The portable device 55-1 is connected to a USB port 73-1 via the USB cable. The USB port 73-1 outputs data (for example, content or a command from the portable device 55-1) supplied from the HDD 71, the CPU 61, or the RAM 63 via the interface 67, the external bus 66, the bridge 65, or the host bus 64, to the portable device 55-1.

The portable device 55-2 is connected to a USB port 73-2 via the USB cable. The USB port 73-2 outputs data (for example, content or a command from the portable device 55-2) supplied from the HDD 71, the CPU 61, or the RAM 63 via the interface 67, the external bus 66, the bridge 65, or the host bus 64, to the portable device 55-2.

The portable device 55-3 is connected to a USB port 73-3 via the USB cable. The USB port 73-3 outputs data (for example, content or a command from the portable device 55-3) supplied from the HDD 71, the CPU 61, or the RAM 63 via the interface 67, the external bus 66, the bridge 65, or the host bus 64, to the portable device 55-3.

A speaker 74 outputs predetermined voice corresponding to content based on a voice signal supplied from the interface 67.

The keyboard 68 and the speaker 74 are connected to the interface 67, and the interface 67 is connected to the CPU 61 via the external bus 66, the bridge 65, and the host bus 64.

A communication unit 75 is connected to the network 52, transmits data (for example, content transmission request) supplied from the CPU 61 or the HDD 71 via the network 52 by storing the data in predetermined packets, and outputs data (for example, content) which is stored in the received packets to the CPU 61, the RAM 63, or the HDD 71 via the network 52.

The communication unit 75 is connected to the CPU 61 via the external bus 66, the bridge 65, and the host bus 64.

Hereinafter, when individual USB ports 73-1 to 73-3 need not be distinguished from each other, they will be referred to as a USB port 73.

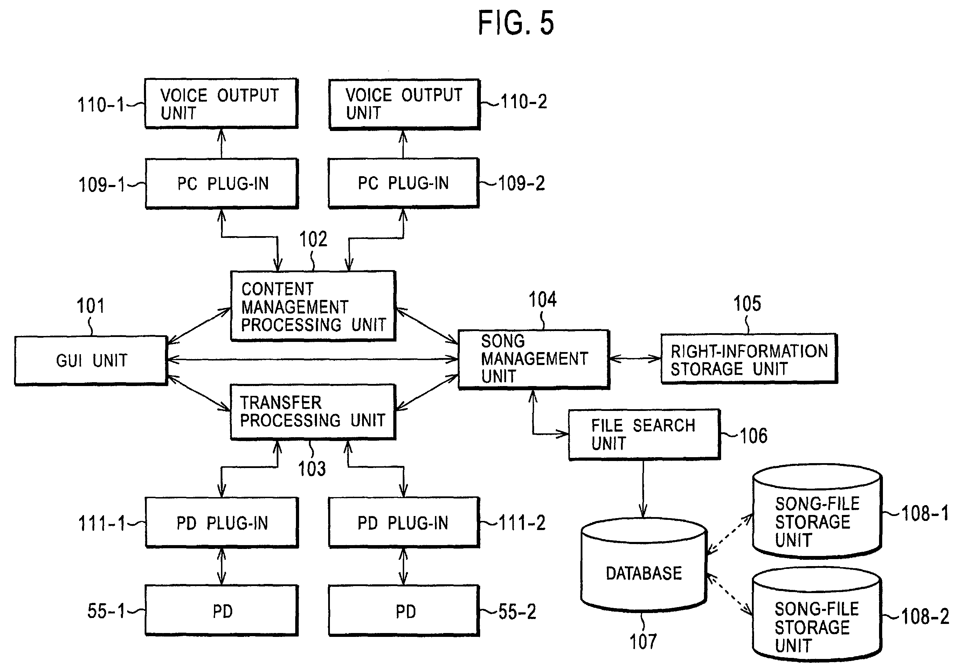

Fig. 5 is a block diagram illustrating the function of the personal computer 51, the function being realized when the CPU 61 executes a content management program. A graphical user interface (GUI) unit 101 supplies the title of a song corresponding to content desired by the user or the name of a file in which the content is stored to a song management unit 104 in accordance with a user's operation with the keyboard 68 or the mouse 69, and also requests registration of data corresponding to the content to a database 107.

The GUI unit 101 obtains data corresponding to the content, for example, a song ID, title of a song, or the name of an artist, from the database 107 via the song management unit 104 so as to allow the display 70 to display the data. When playback of content is requested by a user's operation, the GUI unit 101 supplies the song ID corresponding to the content which has been requested to be played back to a content management processing unit 102, and also requests playback of the content to the content management processing unit 102.

When transfer (check-out, copy, or move) of content is requested by a user's operation, the GUI unit 101 supplies the song ID corresponding to the content which has been requested to be transferred to a transfer processing unit 103, and also requests transfer of the content to the transfer processing unit 103.

When playback of content is requested by the GUI unit 101, the content management processing unit 102 supplies the song ID corresponding to the content which has been requested to be played back to the song management unit 104, and also requests the name of file corresponding to the content. When the content management processing unit 102 obtains the file name from the song management unit 104, it also obtains the content from a song-file storage unit 108-1 or 108-2 via the song management unit 104, a file search unit 106, and the database 107.

The content management processing unit 102 supplies the obtained content to a protected content (PC) plug-in 109-1 or 109-2.

When content is supplied from the content management processing unit 102 and when the content is not encrypted, the PC plug-in 109-1 decodes the encoded content so as to supply the voice data to a voice output unit 110-1. When content is supplied from the content management processing unit 102 and when the content is encrypted, the PC plug-in 109-1 decrypts the encrypted content and decodes the encoded content, so as to supply the voice data to the voice output unit 110-1. The voice output unit 110-1 generates a voice signal based on the voice data and outputs voice to the speaker 74.

When content is supplied from the content management processing unit 102 and when the content is not encrypted, the PC plug-in 109-2 decodes the encoded content so as to supply the voice data to a voice output unit 110-2. When content is supplied from the content management processing unit 102 and when the content is encrypted, the PC plug-in 109-2 decrypts the encrypted content and decodes the encoded content, so as to supply the voice data to the voice output unit 110-2. The voice output unit 110-2 generates a voice signal based on the voice data and outputs the voice to the speaker 74.

The user can install another PC plug-in to the personal computer 51.

Hereinafter, when the individual PC plug-ins 109-1 and 109-2 need not be distinguished from each other, they will be referred to as a PC plug-in 109.

When transfer of content is requested from the GUI unit 101, the transfer processing unit 103 supplies the song ID corresponding to the content which has been requested to be transferred to the song management unit 104 and also requests the name of file corresponding to the content. When the transfer processing unit 103 obtains the file name from the song management unit 104, it also obtains the content corresponding to the file name from the song-file storage unit 108-1 or 108-2 via the song management unit 104, the file search unit 106, and the database 107.

The transfer processing unit 103 supplies the obtained content to a PD plug-in 111-1 or 111-2.

The PD plug-in 111-1 and the portable device 55-1 mutually authenticate when the PD plug-in 111-1 transfers content to the portable device 55-1. When the mutual authentication does not succeed, the PD plug-in 111-1 does not transfer the content to the portable device 55-1.

When content is supplied from the transfer processing unit 103 and when the content is encrypted, the PD plug-in 111-1 supplies the content and data related to the content to the portable device 55-1. When content is supplied from the transfer processing unit 103 and when the content is not encrypted, the PD plug-in 111-1 encrypts the content and supplies the encrypted content and data related to the content to the portable device 55-1.

The mutual authentication may be performed when the portable device 55-1 is connected to the personal computer 51.

The PD plug-in 111-2 and the portable device 55-2 mutually authenticate when the PD plug-in 111-2 transfers content to the portable device 55-2. When the mutual authentication does not succeed, the PD plug-in 111-2 does not transfer the content to the portable device 55-2.

When content is supplied from the transfer processing unit 103 and when the content is encrypted, the PD plug-in 111-2 supplies the content and data related to the content to the portable device 55-2. When content is supplied from the transfer processing unit 103 and when the content is not encrypted, the PD plug-in 111-2 encrypts the content and supplies the encrypted content and data related to the content to the portable device 55-2.

The mutual authentication may be performed when the portable device 55-2 is connected to the personal computer 51.

The user can install another PD plug-in to the personal computer 51.

Hereinafter, when the individual PD plug-ins 111-1 and 111-2 need not be distinguished from each other, they will be referred to as a PD plug-in 111.

The song management unit 104 stores content which is stored in a file recorded in the HDD 71 or content which has been supplied from the content management processing unit 102 in a file via the database 107 so as to record the content in the song-file storage unit 108-1 or 108-2.

The song management unit 104 records data, such as the name of song corresponding to content and the name of file corresponding to content, in the database 107, and also reads the song name or the file name from the database 107. When the song management unit 104 receives a song name or a file name from the GUI unit 101, it adds the record to the database 107 and records the song name or the file name as the item of the record.

The song management unit 104 reads all the song names and song IDs recorded in the database 107 in response to the request from the GUI unit 101 and supplies the read data to the GUI unit 101.

When a song ID is supplied from the content management processing unit 102, the song management unit 104 reads the file name corresponding to the song ID from the database 107 and supplies the read file name to the content management processing unit 102. When a song ID is supplied from the transfer processing unit 103, the song management unit 104 reads the file name corresponding to the song ID from the database 107 and supplies the read file name to the transfer processing unit 103.

The file search unit 106 searches the song-file storage unit 108-1 or 108-2 based on the file name obtained from the database 107, in response to the request from the song management unit 104, so as to find the file (in which the content is stored) corresponding to the file name. The file search unit 106 supplies the file read from the song-file storage unit 108-1 or 108-2 to the song management unit 104, or change the file name so as to supply the file, whose name has been changed, to the song management unit 104.

The song management unit 104 supplies the file which has been supplied from the file search unit 106 and which includes the content to the content management processing unit 102 or the transfer processing unit 103.

The database 107 includes data related to content, for example, a song ID, song name, file names, or other attributes. The database 107 is stored in the HDD 71.

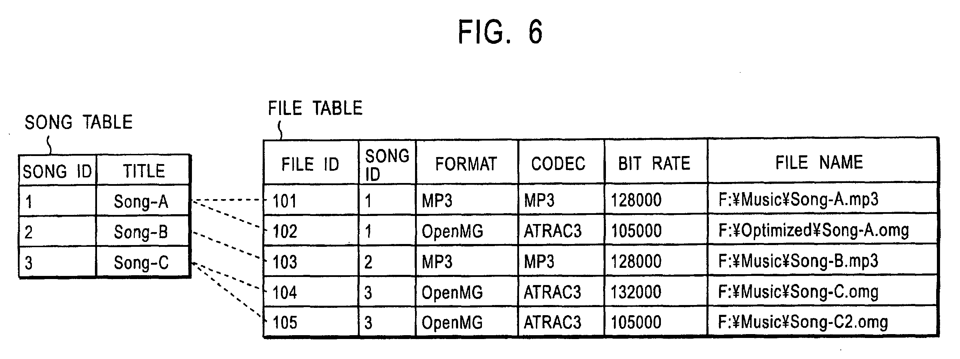

Fig. 6 shows an example of data which is recorded in the database 107. The database 107 is, for example, a relational database, and manages data corresponding to content by using a song table and a file table.

For example, the song table includes a record having an item of song ID and an item of the title of a song. The title of a song is stored corresponding to a song ID. Each song ID uniquely corresponds to a song.

In the example shown in Fig. 6, the title Song-A is recorded corresponding to the song ID 1, the title Song-B is recorded corresponding to the song ID 2, and the title Song-C is recorded corresponding to the song ID 3, in the song table.

For example, the file table includes a record having an item of file ID, an item of song ID, an item of format, an item of codec, an item of bit rate, and an item of file name. A song ID, format, codec, bit rate, and file name are stored corresponding to a file ID. Two or more file IDs may correspond to one song ID.

Each file ID uniquely corresponds to a file. A format is data indicating the form of a file. A codec is data indicating the encoding method of the content stored in a file. A bit rate is data indicating data amount of content per unit of time (for example, for one second). A file name is data indicating a file name including a path including a drive name and a folder name.

In the example shown in Fig. 6, song ID 1, format MP3, codec MP3, bit rate 128000, and file name F: \Music\Song-A.mp3 are stored, corresponding to the file ID 101, in the file table. Also, song ID 1, format OpenMG, codec ATRAC3, bit rate 105000, and file name F: \Optimized\Song-A.omg are stored, corresponding to the file ID 102. Also, in the example shown in Fig. 4, song ID 2, format MP3, codec MP3, bit rate 128000,' and file name F: \Music\Song-B.mp3 are stored, corresponding to the file ID 103, in the file table.

Further, in the example shown in Fig. 6, song ID 3, format OpenMG, codec ATRAC3, bit rate 132000, and file name F: \Music\Song-C.omg are stored, corresponding to the file ID 104, in the file table. Also, song ID 3, format OpenMG, codec ATRAC3, bit rate 105000, and file name F: \Optimized\Song-C2.omg are stored, corresponding to the file ID 105.

The song-file storage unit 108-1 includes, for example, the HDD 71 or an external storage device (not shown) such as a removable disc device, and stores content as a file. The content recorded in the song-file storage unit 108-1 may or may not include right information. The song-file storage unit 108-1 can store one or more files corresponding to a song. The song-file storage unit 108-1 corresponds to one drive letter. The drive letter corresponding to the song-file storage unit 108-1 may be changed.

The song-file storage unit 108-2 includes, for example, the HDD 71 or an external storage device (not shown) such as a removable disc device, and stores content as a file. The content recorded in the song-file storage unit 108-2 may or may not include right information. The song-file storage unit 108-2 can store one or more files corresponding to a song. The song-file storage unit 108-2 corresponds to one drive letter. The drive letter corresponding to the song-file storage unit 108-2 may be changed.

One or more files corresponding to a song may be recorded in the song-file storage unit 108-1, and one or more files corresponding to the song may be recorded in the song-file storage unit 108-2.

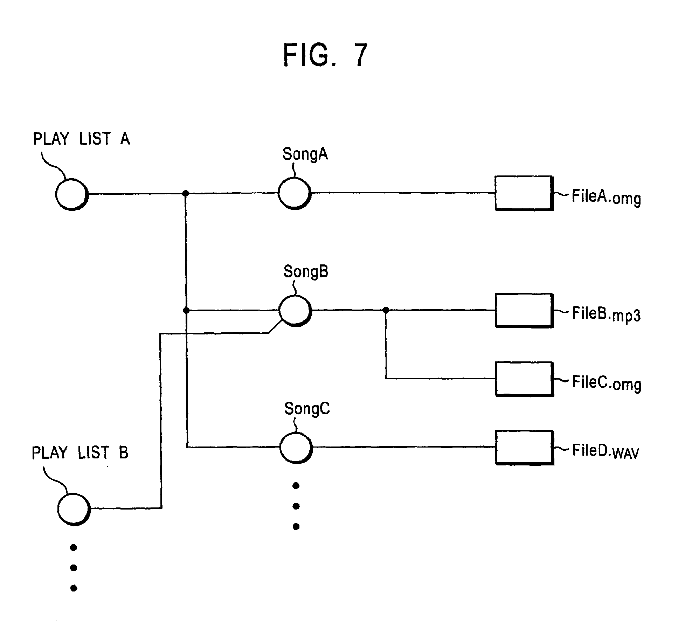

Fig. 7 illustrates the correspondence between a song and a file. In the example shown in Fig. 7, Song-A belonging to a play list A corresponds to File A.omg, Song-B belonging to the play lists A and B corresponds to File B.mp3 and File C.omg, and Song-C belonging to the play list A corresponds to FileD.wav. The play list is a unit for sorting songs, which is used for displaying a song name and so on, and 0 or 1 or more songs are associated therewith.

Accordingly, two or more files of different formats or encoding methods may be used as one piece of content.

A right-information storage unit 105 stores right information corresponding to a file conforming to the standard defined in a secure digital music initiative (SDMI) in the HDD 71 and manages the right information. When the right-information storage unit 105 receives a song ID from the song management unit 104, it searches one piece of right information corresponding to the song ID and supplies the found right information to the song management unit 104.

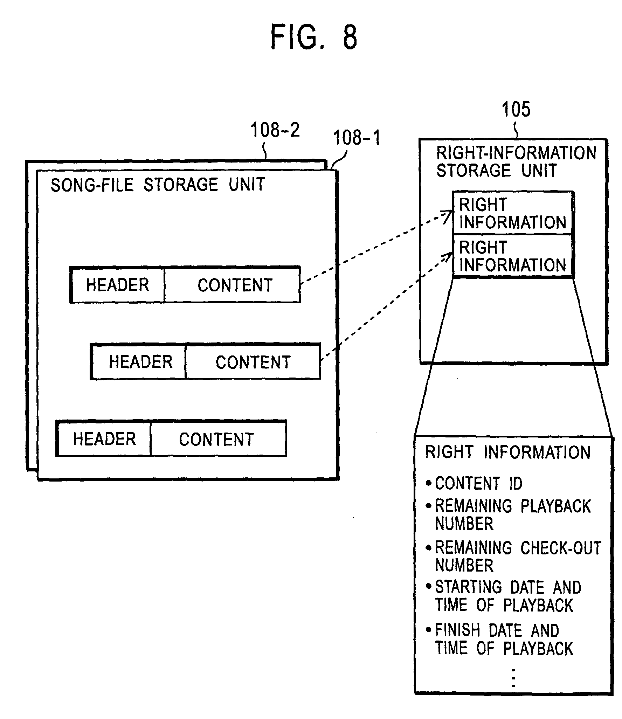

Fig. 8 shows an example of right information stored in the right-information storage unit 105. Each piece of the right information includes, for example, content ID, remaining playback number, remaining check-out number, starting date and time of playback, and finish date and time of playback. Each piece of the right information stored in the right-information storage unit 105 corresponds to a file which is stored in the song-file storage unit 108-1 or 108-2.

A file stored in the song-file storage unit 108-1 or 108-2 includes, for example, a header and content, which is song data.

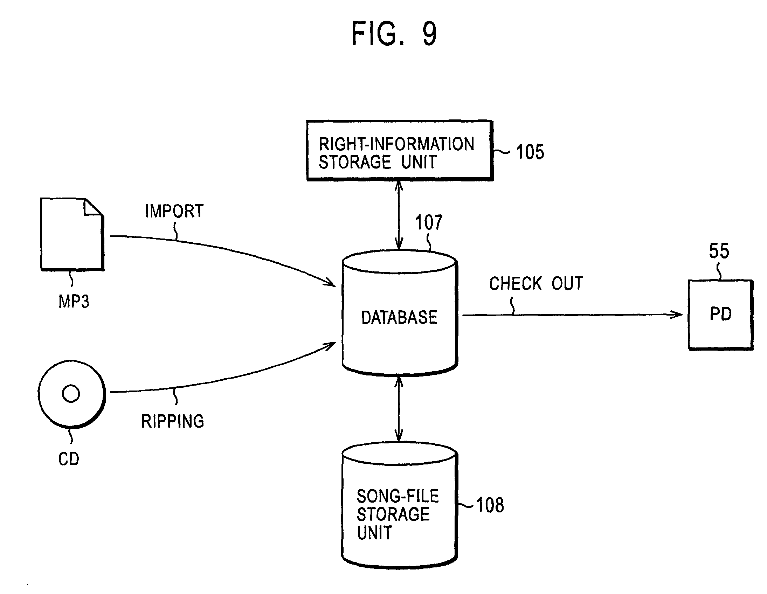

Next, referring to Fig. 9, a process of encrypting content, a process of adding right information corresponding to content, and a process of transform of encoding method of content will be described.

For example, when content of MP3 method is imported (registered in the database 107), and when a first setting has been done (set by the operation of the GUI unit 101), right information is not generated and data corresponding to the content is registered in the database 107.

The content of MP3 method, which has been imported with right information not being generated, is examined whether or not the content of MP3 method includes a watermark of a predetermined method, in accordance with an operation performed thereafter. If a watermark of a predetermined method is not included, content which has been encrypted in MP3 method is further generated and is checked out, or content of ATRAC3 method is further generated and is encrypted, and the encrypted content of ATRAC3 method is stored in the song-file storage unit 108.

For example, when content of MP3 method is imported, and when a second setting has been done, it is examined whether or not the content of MP3 method includes a watermark of a predetermined method. If a watermark of a predetermined method is not included, data corresponding to the content is registered in the database 107. Further, the encoding method of the content of MP3 method is not changed, and right information corresponding to the content of MP3 method is generated in the original form. The generated right information is stored in the right-information storage unit 105.

The imported content of MP3 method, in which right information is generated, is checked out with encrypted content of MP3 method being further generated or is encrypted with content of ATRAC3 method being further generated, in accordance with an operation which is performed thereafter. The encrypted content of ATRAC3 method is stored in the song-file storage unit 108.

Accordingly, the content data management system need not redundantly record two pieces of content having the same information, one being encrypted and the other being not encrypted. Therefore, a recording region of the HDD 71 or the like can be efficiently used.

When content of MP3 method is imported, and when a third setting has been done, it is examined whether or not the content of MP3 method includes a watermark of a predetermined method. If a watermark of a predetermined method is not included, data corresponding to the content is registered in the database 107. Further, ATRAC3-transformed content is generated and the generated content is encrypted. Also, the encrypted content in ATRAC3 method is recorded in the song-file storage unit 108, right information corresponding to the content of ATRAC3 method is generated, and the generated right information is stored in the right-information storage unit 105.

When a watermark of a predetermined method is included in content, the content is not registered, the encoding method thereof is not changed, is not encrypted, and is not checked out.

When content recorded in a CD is processed by ripping, read content is transformed to the ATRAC3 method and is encrypted, content transformed to the ATRAC3 method and encrypted is recorded in the song-file storage unit 108, right information corresponding to the content of ATRAC3 method is generated, and the generated right information is stored in the right-information storage unit 105.

The above-described import processing, predetermined processing after import, or ripping processing is performed to one, two, or more pieces of content.

Next, display examples of pages, which the GUI unit 101 displays on the display 70 when content recorded in each of the personal computer 51 and the PD 55 is managed by check-in or check-out, will be described.

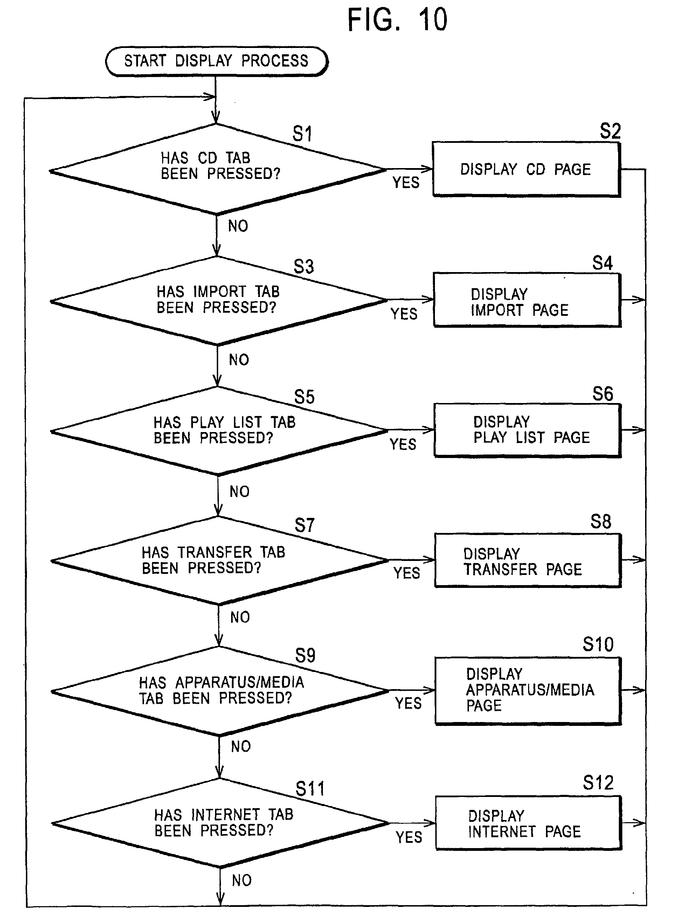

An image displayed under the control of the GUI unit 101 is displayed by being switched with six types of tabs. Hereinafter, a display process of a page which the GUI unit 101 displays on the display 70 when content is managed by the personal computer 51 will be described with reference to the flowchart shown in Fig. 10.

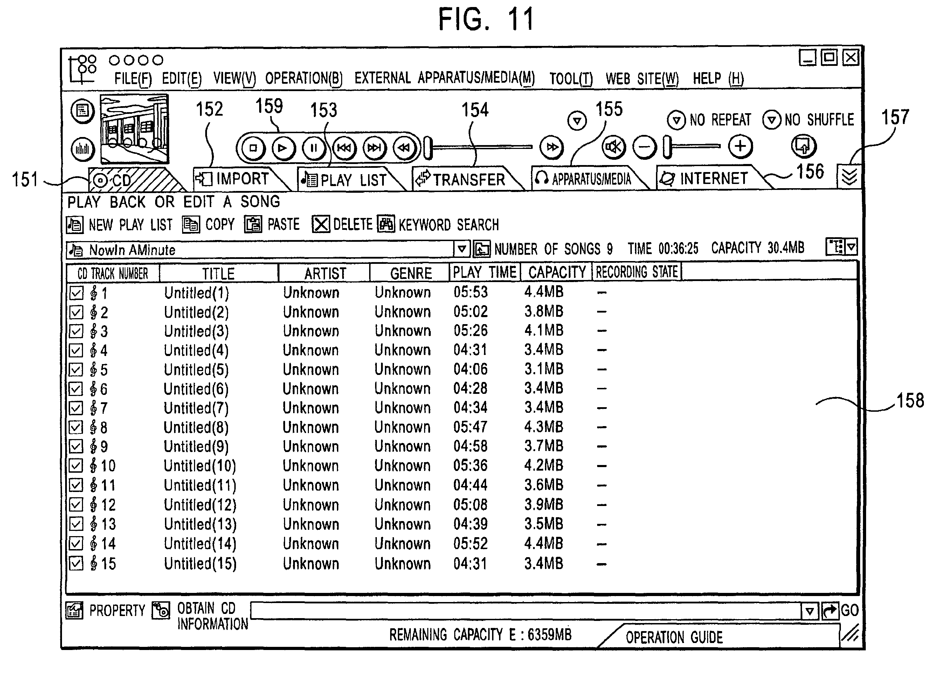

In step S1, the GUI unit 101 determines whether or not a CD tab 156 shown in Fig. 11 has been pressed. For example, when the CD tab 151 is pressed as shown in Fig. 11 (when it is determined that the CD tab 151 has been pressed), the GUI unit 101 displays a CD page in step S2, as shown in Fig. 11. In the CD page, the CD tab 151 is active (display color is changed) so that the state where the CD tab 151 is selected can be visually recognized.

Also, an import tab 152, a play list tab 153, a transfer tab 154, an apparatus/media tab 155, an Internet tab 156, and an equalizer button 157 are displayed on a side of the CD tab 151.

Further, a CD field 158 is displayed on the CD page. For example, a list of content recorded in a CD (for example, an optical disc 92), which is loaded in the drive 72 of the personal computer 1 is displayed. In this example, CD track number, title, artist, genre, play time, capacity, and recording state are displayed from the left in the figure. Each piece of content is selected by using a pointer, and an operation such as playback, stop, pause, fast forwarding, or rewind is performed by using each operation button displayed in an operation-button display unit 159.

When the CD page is displayed in step S2, the process returns to step S1.

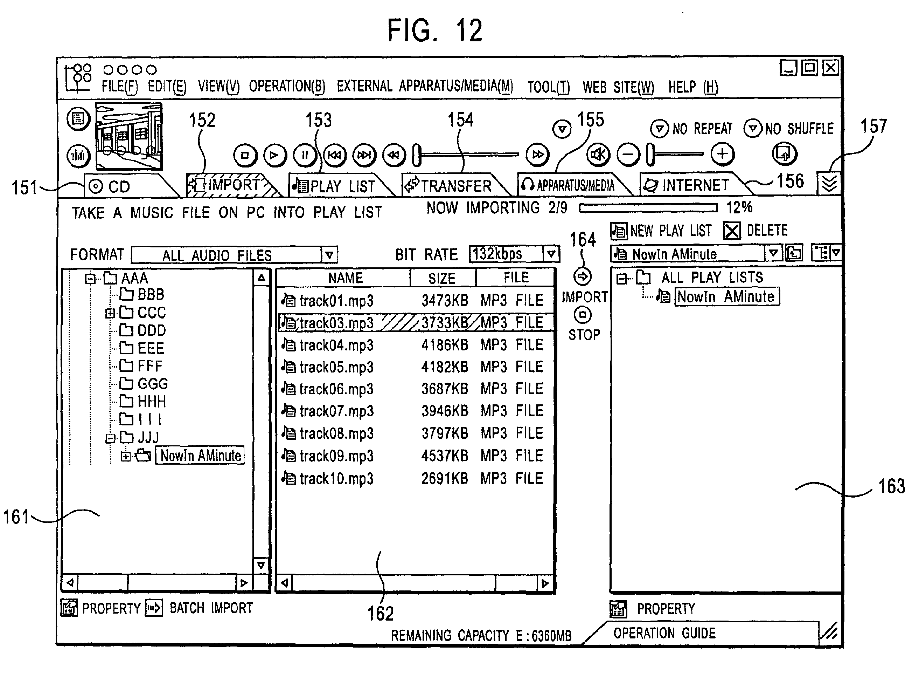

In step S1, when it is determined that the CD tab 151 has not been pressed, it is determined whether or not the import tab 152 has been pressed in step S3. For example, in the state shown in Fig. 11, when the import tab 152 is pressed (when it is determined that the import tab 152 has been pressed), the GUI unit 101 displays an import page in step S4, as shown in Fig. 12. In this import page, the import tab 152 is active so that the state where the import tab 152 is selected can be visually recognized.

In the import page, a field 161 for displaying icons corresponding to folders recorded in the HDD 71 in a tree structure, a field 162 for displaying icons corresponding to files stored in the selected folder and the size of each file, a field 163 used for selecting a play list to which the content to be imported belongs, and a button 164 for instructing import, are displayed.

When a file displayed in the field 162 is selected and when the button 164 for instructing import is clicked, the GUI unit 101 supplies an instruction of import and data indicating the selected file to the song management unit 104. Accordingly, an import process is performed.

When the import page is displayed in step S4, the process returns to step S1.

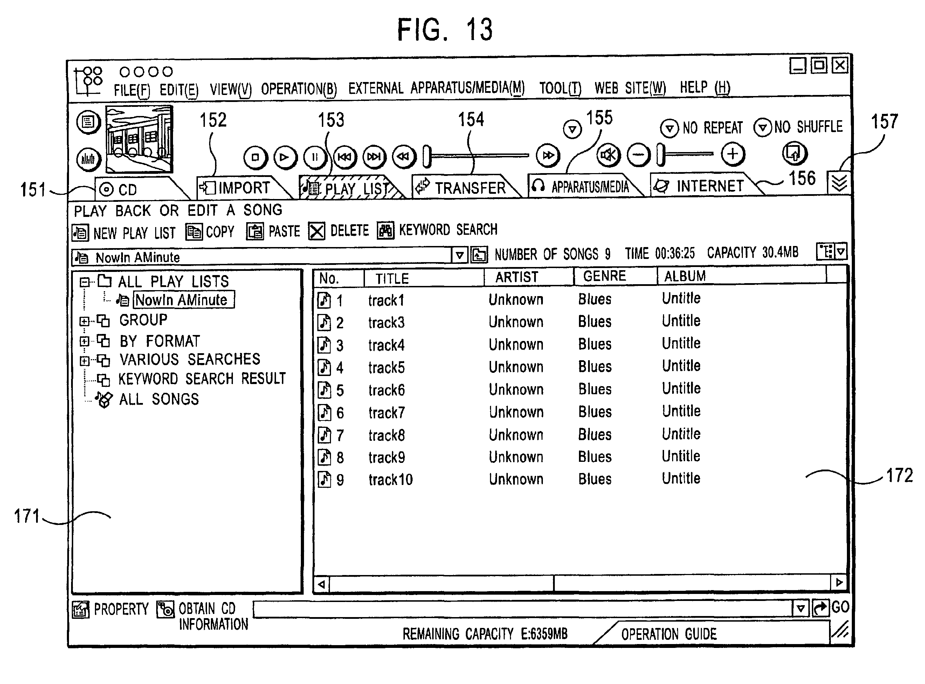

If it is determined that the import tab 152 has not been pressed in step S3, it is determined whether or not the play list tab 153 has been pressed in step S5. For example, in the state shown in Fig. 12, when the play list tab 153 is pressed (when it is determined that the play list tab 153 has been pressed), the GUI unit 101 displays a play list page in step S6, as shown in Fig. 13. In this play list page, the play list tab 153 is active so that the state where the play list tab 153 is selected can be visually recognized.

In the play list page, a field 171 used for selecting a play list, a filed 172 for displaying icons corresponding to imported content, and so on are displayed.

When the play list page is displayed in step S6, the process returns to step S1.

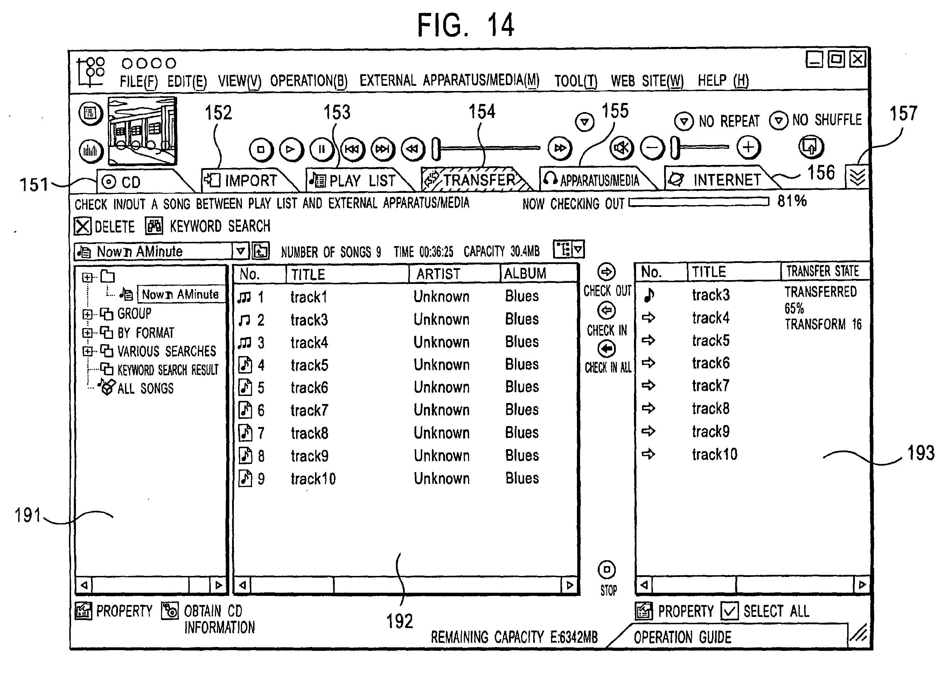

If it is determined that the play list tab 153 has not been pressed in step S5, it is determined whether or not the transfer tab 154 has been pressed in step S7. For example, in the state shown in Fig. 13, when the transfer tab 154 is pressed (when it is determined that the transfer tab 154 has been pressed), the GUI unit 101 displays a transfer page in step S8, as shown in Fig. 14. In this transfer page, the transfer tab 154 is active so that the state where the transfer tab 154 is selected can be visually recognized.

In the transfer page, a field 191 used for selecting a play list, a filed 192 for displaying icons corresponding to checked-in content, and a field 193 for displaying icons corresponding to content which has been checked out to the PD5 are displayed.

When the transfer page is displayed in step S8, the process returns to step S1.

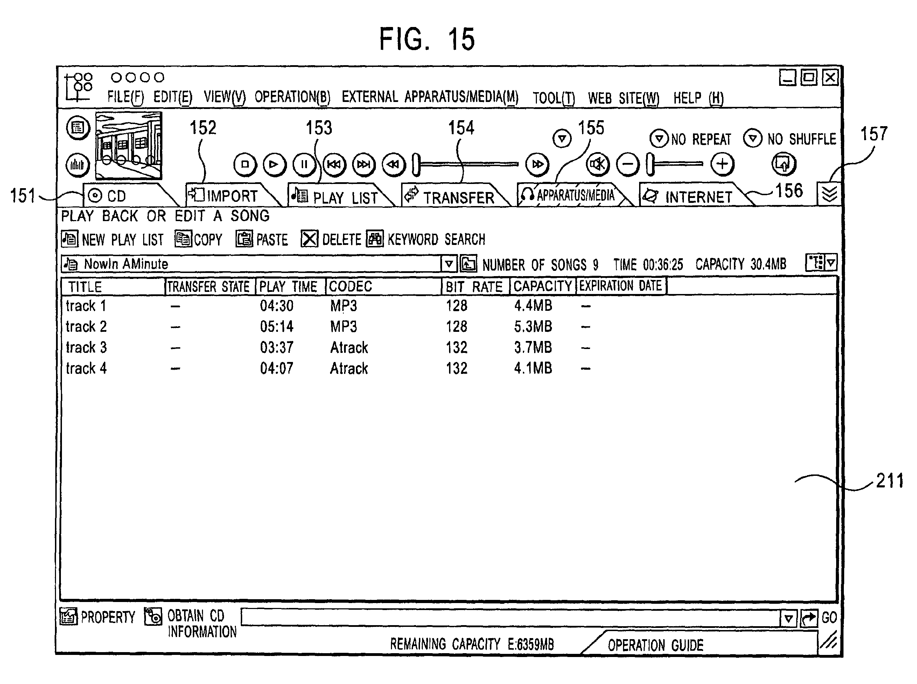

When it is determined that the transfer tab 154 has not been pressed in step S7, it is determined whether or not the apparatus/media tab 155 has been pressed in step S9. For example, in the state shown in Fig. 14, when the apparatus/media tab 155 is pressed (when it is determined that the apparatus/media tab 155 has been pressed), the GUI unit 101 displays an apparatus/media page in step S10, as show in Fig. 15. In this apparatus/media page, the apparatus/media tab 155 is active so that the state where the apparatus/media tab 155 is selected can be visually recognized. In the apparatus/media page, a field 211 for displaying icons corresponding to content which has been checked out to the PD5 is displayed.

When the apparatus/media page is displayed in step S10, the process returns to step S1.

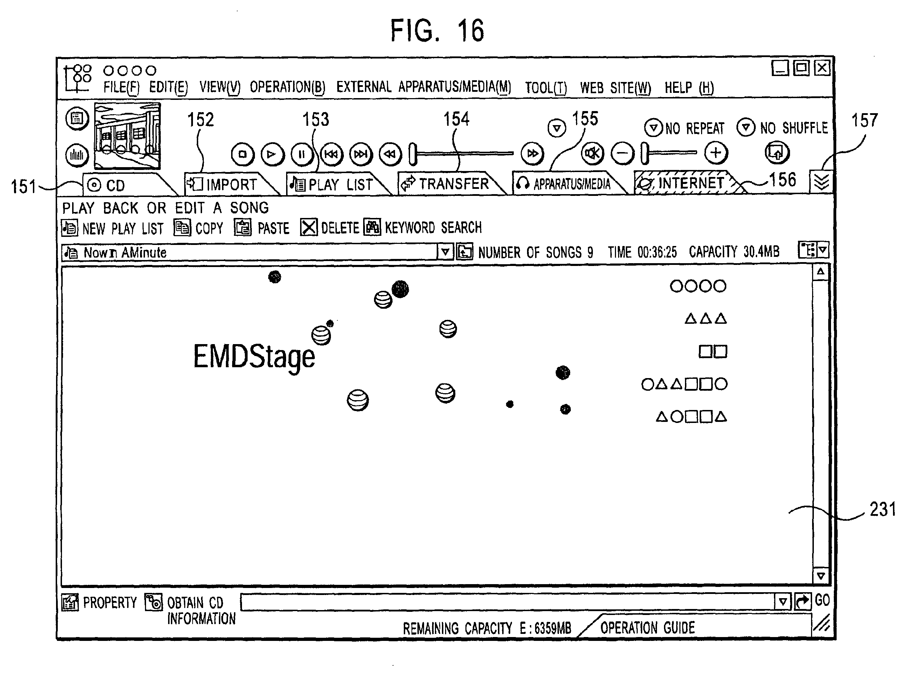

When it is determined that the apparatus/media tab 155 has not been pressed in step S9, it is determined whether or not the Internet tab 155 has been pressed in step S11. For example, in the state shown in Fig. 15, when the Internet tab 156 is pressed (when it is determined that the internet tab 156 has been pressed), the GUI unit 101 displays the Internet page in step S12, as shown in Fig. 16. In this Internet page, the Internet tab 156 is active so that the state where the Internet tab 156 is selected can be visually recognized. In the Internet page, a field 231 for displaying a Web page related to content which has been transmitted from the WWW server 4 connected through the Internet is displayed.

When the Internet page is displayed in step S12, the process returns to step S1.

According to the above-described process, the GUI unit 101 switches and displays the pages.

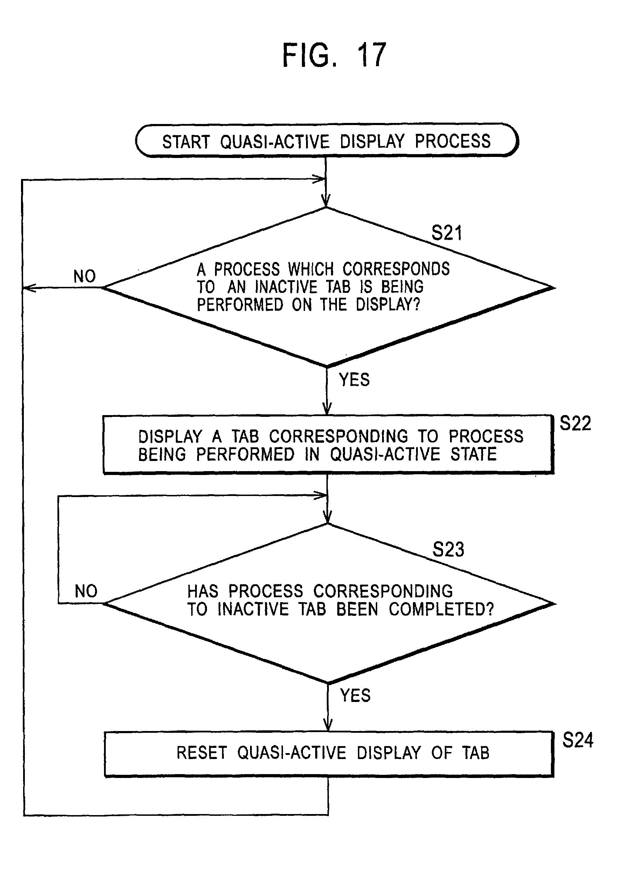

In the above-described process, for example, when the import page is displayed in step S4 and when the CD tab 151 is pressed while the import process being performed, the page is switched to the CD page. At this time, information indicating that the process operated in the import page is being performed can be displayed. Hereinafter, this display is referred to as a quasi-active display. Now, a quasi-active display process will be described with reference to the flowchart shown in Fig. 17.

In step S21, the GUI unit 101 determines whether or not a process which corresponds to an inactive tab is being performed on the display. Further, the GUI unit 101 repeats the process until a process which is being performed is detected. For example, as described above, when the CD tab 151 is pressed in a state where the import process, which is operated by the import tab 152, is being performed, the CD tab 151 is displayed in an active state. At that time, it is determined that a process on the display of an inactive tab (in this case, import process corresponding to the import tab 152) is being performed, and the process proceeds to step S22.

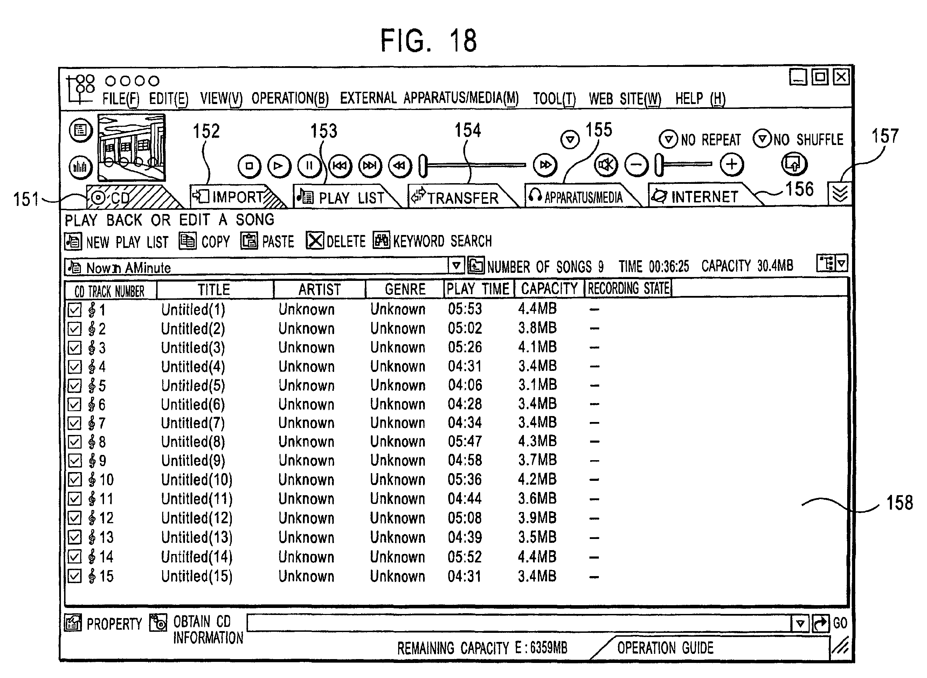

In step S22, the GUI unit 101 displays a tab corresponding to a display in which a process is being performed in a quasi-active state. That is, in the above-described case, as shown in Fig. 18, in a state where the CD tab 151 is active, the import tab 152 is displayed in a quasi-active state (the color of a part of the tab is changed).

In step S23, the GUI unit 101 determines whether or not a process corresponding to a display of a tab which is not active (import tab 152) has been completed, and repeats that process until the process is completed. When it is determined that the process has been completed, the process proceeds to step S24.

In step S24, the GUI unit 101 resets the quasi-active display of the import tab 152, that is, the import tab 152 is made to be inactive, and the process returns to step S21.

With the above-described quasi-active display process, the user can visually recognize whether or not a process corresponding to a non-selected tab is being performed on the display, as well as an activated tab.

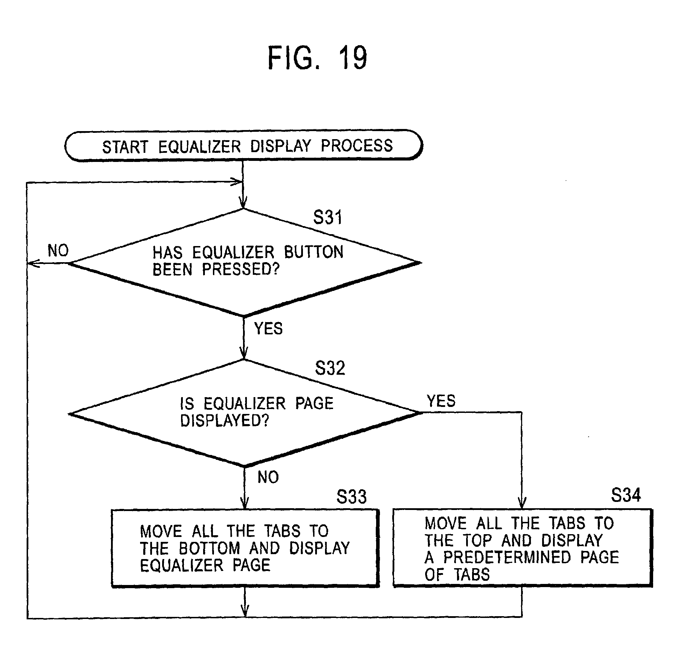

Next, a process for displaying an equalizer page, which controls played back voice, by using the equalizer button 157, will be described with reference to the flowchart shown in Fig. 19.

In step S31, the GUI unit 101 determines whether or not the equalizer button 157 has been pressed, and repeats that process until it is determined that the equalizer button 157 has been pressed. When it is determined that the equalizer button 157 has been pressed in step S31, the GUI unit 101 determines whether or not the equalizer page is displayed in step S32. For example, when the play list page shown in Fig. 13 is displayed, it is determined that the equalizer page is not displayed, and the process proceeds to step S33.

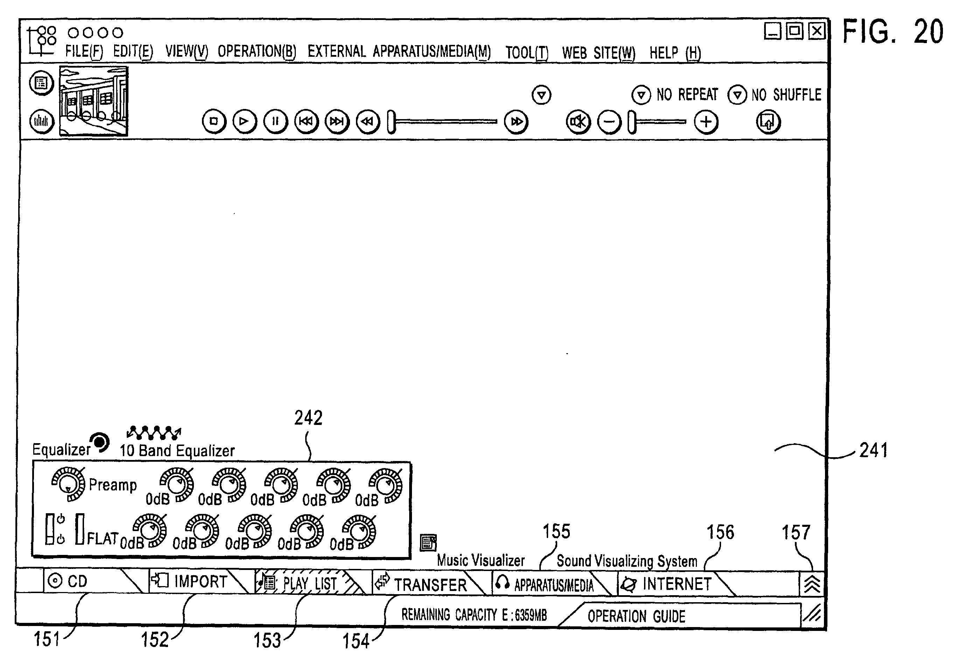

In step S33, as shown in Fig. 20, the GUI unit 101 moves the display part of the CD tab 151, the import tab 152, the play list tab 153, the transfer tab 154, the apparatus/media 155, the Internet tab 156, and the equalizer button 157 to the bottom of the display. Further, the GUI unit 101 displays an equalizer page 241 on the fields 171 and 172, which have been displayed under the CD tab 151, the import tab 152, the play list tab 153, the transfer tab 154, the apparatus/media 155, the Internet tab 156, and the equalizer button 157, such that the equalizer page 241 covers the fields 171 and 172 from the top to the bottom thereof.

An equalizer control button display unit 242 is displayed on the equalizer page 241, and the user can control the equalizer of voice to be played back by operating various buttons displayed therein.

In step S32, in the state shown in Fig. 20, when any of the equalizer button 157, the CD tab 151, the import tab 152, the play list 153, the transfer tab 154, the apparatus/media 155, and the Internet tab 156 is pressed, the process proceeds to step S34 because the equalizer page 241 is displayed.

In step S34, as shown in Fig. 13, the GUI unit 101 moves the CD tab 151, the import tab 152, the play list tab 153, the transfer tab 154, the apparatus/media 155, the Internet tab 156, and the equalizer button 157 to the original position. That is, the GUI unit 101 makes the equalizer page 241 in a non-display state such that the equalizer page 241 is taken off from the bottom to the top, and the play list page is displayed. At this time, by specifying the position of each of the CD tab 151, the import tab 152, the play list tab 153, the transfer tab 154, the apparatus/media 155, the Internet tab 156, and the equalizer button 157, the user can use pages corresponding to various tabs as if he or she deals with a plurality of lists.

In the above-described example, the case where the play list page is displayed has been described. However, the same process can be performed if any of the CD page, the import page, the transfer page, the apparatus/media page, and the Internet page is displayed. Also, a quasi-active display process can be simultaneously performed.

Further, in the above description, the CD tab 151, the import tab 152, the play list tab 153, the transfer tab 154, the apparatus/media 155, the Internet tab 156, and the equalizer button 157 are moved in the vertical direction in Fig. 20 in the equalizer page 241, and the equalizer page 241 is operated in the vertical direction. However, the operating direction of the equalizer page 241 or other various tabs may be a horizontal direction.

With the above-described process, each page is displayed on one display, and only necessary information can be displayed. Thus, the user can easily recognize the displayed information. Also, since only one page is displayed, the user need not move a pointer right and left or up and down in order to perform various operations.

The above-described series of processes can be executed by hardware or software. In order to allow the software to execute the series of processes, a program constituting the software is installed from a recording medium into a computer which is incorporated to a dedicated hardware or into a multi-purpose personal computer, in which various functions can be executed by installing various programs therein.

The recording medium includes the HDD 71 which is provided to a user such that the HDD 71 is incorporated into the personal computer 51 in advance as shown in Fig. 4 and in which a program is recorded. In addition, the recording medium includes package media which are distributed to users to provide programs to them and which contain a program, such as a magnetic disc 91 (including a flexible disc), an optical disc 92 (including a compact disc-read only memory (CD-ROM) and a digital versatile disc (DVD)), a magnetooptical disc 93 (including a mini-disc (MD)®), and a semiconductor memory 94 (including a memory stick).

In the description, the steps describing the program recorded in a recording medium may performed in time series according to the described order. Also, the steps may be performed in parallel or independently.

Also, in the description, the system refers to the entire apparatus including a plurality of devices.

### Industrial Applicability

According to the present invention, visibility of displayed content can be improved. Further, since a plurality of pages need not be displayed, the user need not move a pointer right and left or up and down in order to perform various operations, and thus operationality can be improved.

## Claims

1. An information processing apparatus comprising:
playback means for playing back content;
control-page display means for displaying a control page for controlling the playback means;
content-list display means for displaying a content list page;
switching means for switching between the control page and the list page; and
display control means for controlling the control-page display means and the content-list display means so that the control page and the list page are displayed such that the control page covers the list page or that the control page is taken off from the list page when the switching means switches between the control page and the list page.

2. The information processing apparatus according to Claim 1, wherein the content-list display means displays a plurality of list pages and displays a tab corresponding to each list page.

3. The information processing apparatus according to Claim 2, wherein the display method of the tab in the list page is changed when the tab includes content which is being performed.

4. An information processing method comprising:
a playback step for playing back content;
a control-page display step for displaying a control page for controlling the playback step;
a content-list display step for displaying a content list page;
a switching step for switching between the control page and the list page; and
a display control step for controlling the control-page display step and the content-list display step so that the control page and the list page are displayed such that the control page covers the list page or that the control page is taken off from the list page when the control page and the list page are switched in the switching step.

5. A program for allowing a computer to execute steps comprising:
a playback control step for controlling playback of content;
a control-page display control step for controlling display of a control page for controlling the playback control step;
a content-list display control step for controlling display of a content list page;
a switching control step for controlling switching between the control page and the list page; and
a display control step for controlling the control-page display control step and the content-list display control step so that the control page and the list page are displayed such that the control page covers the list page or that the control page is taken off from the list page when the control page and the list page are switched in the switching step.
